(19) Europäisches Patentamt
European Patent Office
Office européen des brevets

(11) Veröffentlichungsnummer: **0 341 397 A2**

(12) **EUROPÄISCHE PATENTANMELDUNG**

(21) Anmeldenummer: **89104625.2**

(51) Int. Cl.4: **C08G 73/16**

(22) Anmeldetag: **15.03.89**

(30) Priorität: **13.05.88 DE 3816402**

(43) Veröffentlichungstag der Anmeldung: **15.11.89 Patentblatt 89/46**

(84) Benannte Vertragsstaaten: **AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Poll, Heinz-Günter, Dr.**
**Tucherweg 80**
**D-4010 Hilden(DE)**

(54) **Formmassen bestehend aus einem thermoplastisch verarbeitbaren, aromatischen Polyesterimid.**

(57) Es sollen besser verarbeitbare Polyesterimide mit guten mechanischen Eigenschaften zur Verfügung gestellt werden.

Dies wurde erreicht durch Polyesterimide, enthaltend die Reste nachstehender Ausgangsmonomeren:

A. 0 - 70 Mol-% HO-Ar-COOH
B. 0 - 44 Mol-% HOOC-Ar′-COOH
C. 15 - 45 Mol-% HO-Ar″-OH
D. 1 - 45 Mol-% einer Verbindung der allgemeinen Formel

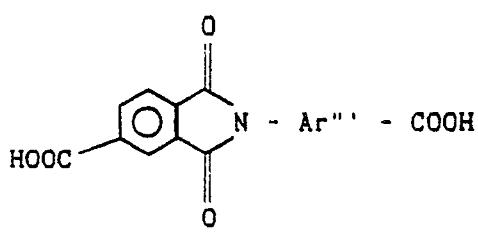

Mit Hilfe der Erfindung gelingt es, besser verarbeitbare Formmassen mit guten mechanischen Eigenschaften zur Verfügung zu stellen.

EP 0 341 397 A2

**Formmassen bestehend aus einem thermoplastisch verarbeitbaren, aromatischen Polyesterimid**

Gegenstand der Erfindung sind Formmassen bestehend aus einem thermoplastisch verarbeitbaren, aromatischen Polyesterimid.

Flüssigkristalline Polyesterimide sind bereits bekannt. Sie können jedoch hinsichtlich u. a. ihrer Eigenfarbe und der geringen Kristallinität nicht befriedigen. So werden in DE-OS 29 50 939 Polyesterimide aus 4-(4'-Carboxyphthalimido)benzoesäure, 2,6-Naphthalindicarbonsäure und einem chlor- oder alkylsubstituierten Hydrochinon bzw. 4-(4'-Hydroxyphthalimido)phenol, 2,6-Napthalindicarbonsäure und einer chlor- oder alkylsubstituierten Terephthalsäure beschrieben. Analog dazu wird in US 4 383 105 statt der Naphthalindicarbonsäure 6-Hydroxy-2-naphthalincarbonsäure eingesetzt. Die Monomeren sind schwer zugänglich, so daß die Polymeren vom technischen Standpunkt her uninteressant sind.

Polyesterimide, die Reste von $C_8$- bis $C_{16}$-Alkylen-alpha,omega-bis-trimellitsäureimiden (DE-OS 35 16 427) bzw. $C_2$- bis $C_{12}$-Alkylen-alpha,omega-bis-trimellitsäureimiden (EP-OS 0 213 362) enthalten, weisen nicht die gewünschte hohe thermische Beständigkeit auf.

Aus DE-OS 35 42 857 und in EP-OS 0 225 537 sind Polyesterimide bekannt, die sich von Bistrimellitsäureimiden einkerniger oder zweikerniger Diamine herleiten.

Aufgabe der Erfindung war es, aromatische, vorzugsweise in der Schmelze flüssigkristalline, Polyesterimide zur Verfügung zu stellen, die eine Kombination von gutem Schmelzfließverhalten, hervorragender Schlag- und Kerbschlagzähigkeit, hoher Steifigkeit und hoher Wärmeformbeständigkeit aufweisen.

Die Aufgabe wird durch Polyester gelöst, die Reste nachstehender Ausgangsmomoneren enthalten:

A. 0 - 70 Mol-% HO-Ar-COOH
B. 0 - 44 Mol-% HOOC-Ar'-COOH
C. 15 - 45 Mol-% HO-Ar''-OH
D. 1 - 45 Mol-% einer Verbindung der allgemeinen Formel

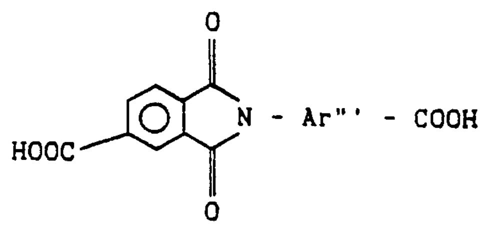

hierbei bedeutet
Ar: 1.3- oder 1.4-Phenylen
Ar', Ar'': 1.3- oder 1.4-Phenylen
oder

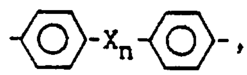

Ar' und Ar'' können gleich oder ungleich sein;
Ar''': 1.3- oder 1.4-Phenylen;
X: -O-; -S-; $-SO_2-$; $-CR_2-$; -CO-;
R: -H, $C_1$ - $C_4$-Alkyl;
n: 0 oder 1;
alle Mengenangaben beziehen sich auf die Summe von A. bis D., und sie müssen in der Summe 100 Mol-% ergeben, wobei das molare Verhältnis (B. + D.) : C. im Bereich von 0,9 : 1 bis 1,1 : 1 liegt.

Als aromatische Hydroxycarbonsäuren (Komponente A.) kommen p-Hydroxybenzoesäure und m-Hydroxybenzoesäure infrage.

Als aromatische Dicarbonsäuren (Komponente B.) werden Isophthalsäure, Terephthalsäure, 4,4'-Diphenyletherdicarbonsäure, 4,4'-Benzophenondicarbonsäure oder 4,4'-Diphenylsulfondicarbonsäure oder Gemische davon eingesetzt.

Als aromatische Dihydroxyverbindungen (Komponente C.) werden folgende Verbindungen eingesetzt:

Hydrochinon, Resorcin, 4,4'-Dihydroxybiphenyl, 4,4'-Dihydroxydiphenylether, 4,4'-Dihydroxydiphenylsulfon; 4,4'-Dihydroxydiphenylsulfid; 4,4'-Dihydroxybenzophenon; Bisphenol A oder Gemische davon.

Verbindungen der allgemeinen Formel

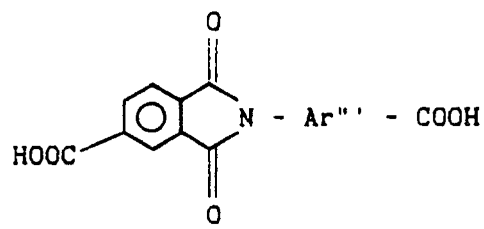

sind Imide, die sich von Trimellitsäureanhydrid und 3- bzw. 4-Aminobenzoesäure herleiten. Sie lassen sich aus diesen Vorstufen durch beliebige Standardverfahren herstellen, die für die Imidbildung aus Säureanhydriden und Aminen geeignet sind.

Bevorzugt eingesetzt werden p-Hydroxybenzoesäure; Iso- und/oder Terephthalsäure; Hydrochinon, 4,4'-Dihydroxybiphenyl; 4-(4'-Carboxyphthalimido)benzoesäure

Die Komponente A. wird bevorzugt eingesetzt in Mengen von 10 bis 50 Mol-%, die Komponente B. in Mengen von 10 bis 35 Mol-%, die Komponente C. in Mengen von 20 bis 40 Mol-% und die Komponente D. in Mengen von 3 bis 30 Mol-%. Das molare Verhältnis von (B. + D.) : C. bewegt sich im Bereich von 0,9 : 1 bis 1,1 : 1, bevorzugt 0,96 : 1 bis 1,04 : 1.

Die Mengenangaben der Einzelkomponenten beziehen sich auf die Summe der Komponenten A. bis D. Hierbei müssen sie in der Summe 100 Mol.-% ergeben.

Zur Herstellung dieser Polyesterimide kann jede für aromatische Polyester gebräuchliche Polymerisationsmethode benutzt werden (z. B. US-PS 4 093 595, DE-OS 20 25 971, EP-OS 0 050 821 und US-PS 4 184 996). Hierbei können die eingesetzten Monomeren mit ihren freien Endgruppen vorliegen oder auch als Derivate davon, z. B. mit einer Ester-, Säurechlorid- oder Acyloxy-Gruppe. Die Umsetzung der Monomeren kann in Schmelze erfolgen, es kann aber auch in Gegenwart eines inerten Wärmeüberträgers gearbeitet werden, wobei das Produkt als Aufschlämmung anfällt. Im allgemeinen werden die Komponenten A. und C. als Acetate bzw. Bisacetate und die Komponenten B. und D. als freie Dicarbonsäuren eingesetzt.. Beim Einsatz der freien Bisphenole bzw. Hydroxycarbonsäuren können die Acetate bzw. Bisacetate durch Vorreaktion mit Acetanhydrid in situ hergestellt werden.

Die Polykondensationsgeschwindigkeit läßt sich durch Zugabe eines üblichen Veresterungskatalysators (z. B. Alkali-, Erdalkali-, Zinkacetat; Germaniumdioxid, Dialkylzinnoxid, Titantetraalkoxide, p-Toluolsulfonsäure) erhöhen. Die Menge an Katalysator beträgt etwa 0,001 bis 1 Gew.-%, vorzugsweise zwischen 0,01 und 0,2 Gew.-%, bezogen auf die Summe der Monomeren.

Das Molekulargewicht eines zunächst hergestellten Polyesterimids kann gegebenenfalls zusätzlich durch eine Festphasennachkondensation weiter erhöht werden, wobei das zerkleinerte Polymere mehrere Stunden in einer inerten Atmosphäre (z. B. Stickstoff oder Vakuum) bei Temperaturen zwischen 160 und 320 °C gehalten wird.

Die erfindungsgemäßen Polyesterimide besitzen eine Glasübergangstemperatur $T_g$ von mehr als 130 °C, vorzugsweise zwischen 140 und 180 °C, und gegebenenfalls einen Kristallitschmelzpunkt $T_m$ von maximal 360 °C. Besonderes Interesse besitzen diejenigen Polyesterimide, die oberhalb von $T_m$ (bei amorphen Polyesterimiden oberhalb von $T_g$) eine flüssigkristalline Schmelze bilden. Die Lösungsviskosität sollte mindestens 0,5 dl/g betragen.

Die Polyesterimide können auf üblichen Maschinen durch Spritzguß oder Extrusion zu den erfindungsgemäßen Formmassen verarbeitet werden.

Die Formmassen können Füllstoffe, wie Talkum, oder Verstärkungsmittel, wie Glas-, ARAMID®- oder Kohlefasern, sowie andere übliche Zusätze, wie z. B. Pigmente oder Stabilisatoren, enthalten.

Die Formmassen können nach üblichen Verfahren wie Spritzguß, Extrusion o. ä. zu Formteilen, Fasern, Folien usw. verarbeitet werden. Ebenso ist die Verwendung als Beschichtungsmittel ausgehend vom Pulver (z. B. Wirbelsinterverfahren), einer flüssigen Dispersion oder einer Lösung möglich.

Die aus den erfindungsgemäßen Formmassen hergestellten Formteile zeichnen sich durch eine niedrige Schmelzeviskosität unter Verarbeitungsbedingungen, eine hervorragende Schlag- und Kerbschlagzähigkeit, eine hohe Steifigkeit und hohe Wärmeformbeständigkeit aus. Sie sind flammwidrig und äußerst chemikalienresistent.

Die in der Beschreibung und den Beispielen genannten Parameter wurden mit Hilfe nachstehender

Verfahren bestimmt.

Die reduzierte Viskosität ($eta_{red}$) wird an einer Lösung des Polymeren (5 g/l) in Phenol/o-Dichlorbenzol 50/50 Gew.-Teile bei 25 °C analog DIN 53 728 bestimmt.

Der Glaspunkt ($T_g$) und der Schmelzpunkt ($T_m$) werden mit Hilfe von DSC bei einer Aufheizrate von 10 °C/min bestimmt.

Die polarisationsmikroskopische Untersuchung auf flüssigkristallinen Charakter wird auf einem Leitz-Orthoplan-Pol-Mikroskop mit 13-facher Objektvergrößerung in Verbindung mit einem Mettler-Heiztisch FP 52 durchgeführt, der auf einen Betrieb bis 385 °C umgerüstet wurde. Die Ausbildung einer Schlierentextur bei gekreuzten Polarisatoren zeigt hierbei flüssigkristallines Verhalten an.

## Beispiele

### Beispiel 1

9,97 g Isophthalsäure (30,77 Mol-%), 2,33 g 4-(4'-Carboxyphthalimido)-benzoesäure (3,85 Mol-%), 11,77 g Hydrochinondiacetat (30,77 Mol-%), 2,03 g 4,4'-Diacetoxybiphenyl (3,85 Mol-%) und 10,81 g 4-Acetoxybenzoesäure (30,77 Mol-%) werden zusammen mit 36 mg Natriumacetat (0,1 Gew.-%) unter Abdestillieren der gebildeten Essigsäure je 30 min bei 260 °C und 280 °C sowie 1 h bei 300 °C gerührt. Anschließend wird innerhalb von 30 min der Druck auf 20 mbar erniedrigt und gleichzeitig auf 320 °C hochgeheizt, wonach noch 15 min bei 320 °C und 20 mbar gerührt wird. Die viskose fadenbildende Schmelze wird entnommen.

$eta_{red}$: 1,18 dl/g; $T_m$: 340 °C; $T_g$: 142 °C.

Die polarisationsmikroskopische Untersuchung ergibt flüssigkristallines Verhalten oberhalb von $T_m$ bis zur Meßgrenze von 385 °C.

### Beispiel 2

| | |
|---|---|
| 9,97 g | Isophthalsäure (25,00 Mol-%) |
| 9,32 g | 4-(4'-Carboxyphthalimido)benzoesäure (12,50 Mol-%) |
| 11,77 g | Hydrochinondiacetat (25,00 Mol-%) |
| 8,12 g | 4,4'-Diacetoxybiphenyl (12,50 Mol-%) |
| 10,81 g | 4-Acetoxybenzoesäure (25,00 Mol-%) |
| 49 mg | Natriumacetat |

Beispiel 2 wird analog Beispiel 1 durchgeführt.

$eta_{red}$: 1,32 dl/g; $T_m$: nicht sichtbar; $T_g$: 153 °C.

Die polarisationsmikroskopische Untersuchung ergibt flüssigkristallines Verhalten oberhalb des Fließpunktes (ca. 270 °C) bis zur Meßgrenze von 385 °C.

### Beispiel 3

997,0 g Isophthalsäure (22,22 Mol-%), 466,0 g 4-(4'-Carboxyphthalimido)-benzoesäure (5,56 Mol-%), 1177,0 g Hydrochinondiacetat (22,22 Mol-%), 406,0 g 4,4'-Diacetoxybiphenyl (5,56 Mol-%), 2162,0 g 4-Acetoxybenzoesäure (44,44 Mol-%) und 1,0 g Natriumacetat werden unter Abdestillieren der entstehenden Essigsäure je 45 min bei 260 °C und 270 °C gerührt, dann innerhalb von 45 min auf 320 °C und anschließend innerhalb von 15 min auf 330 °C aufgeheizt. Nach Austragen des Produktes wird dieses auf Granulatgröße zerkleinert und bei ca. 2 bis 5 mbar 16 h bei 160 °C, 12 h bei 200 °C, 9 h bei 250 °C und 10 h bei 300 °C in fester Phase nachkondensiert. Das Produkt ($eta_{red}$: 1,27 dl/g; $T_m$: nicht sichtbar; $T_g$: 137 °C) wird bei einer Temperatur von 340 °C und einer Formtemperatur von 70 °C zu Prüfkörpern verspritzt. Folgende Eigenschaften wurden ermittelt:

| | |
|---|---|
| Kerbschlagzähigkeit (DIN 53 453), 23 °C:<br>Schlagzähigkeit (DIN 53 453, 23 °C: | 8/8 angebrochen (42 kJ/m²)<br>8/8 angebrochen (56 kJ/m²) |
| Zugversuch nach DIN 53 455: | |
| Reißspannung delta$_r$:<br>Reißdehnung epsilon$_r$:<br>Zug-E-Modul (DIN 53 457): | 128 N/mm²<br>2,7 %<br>16 150 N/mm² |

Die polarisationsmikroskopische Untersuchung ergibt flüssigkristallines Verhalten bis zur Meßgrenze (385 °C).

## Ansprüche

1. Formmasse bestehend aus einem thermoplastisch verarbeitbaren, aromatischen Polyesterimid enthaltend die Reste nachstehender Ausgangsmonomeren:
A. 0 - 70 Mol-% HO-Ar-COOH
B. 0 - 44 Mol-% HOOC-Ar'-COOH
C. 15 - 45 Mol-% HO-Ar''-OH
D. 1 - 45 Mol-% einer Verbindung der allgemeinen Formel

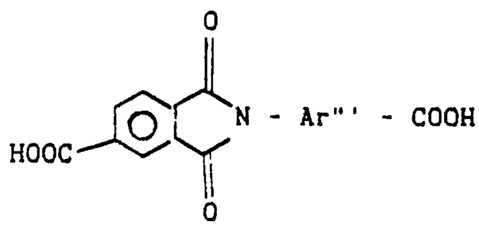

hierbei bedeutet
Ar: 1.3- oder 1.4-Phenylen
Ar', Ar'': 1.3- oder 1.4-Phenylen
oder

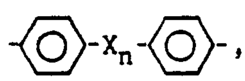

Ar' und Ar'' können gleich oder ungleich sein;
Ar''': 1.3- oder 1.4-Phenylen;
X: -O-; -S-; $-SO_2-$; $-CR_2-$; -CO-;
R: -H, $C_1$ - $C_4$-Alkyl;
n: 0 oder 1;
alle Mengenangaben beziehen sich auf die Summe von A. bis D., und sie müssen in der Summe 100 Mol-% ergeben, wobei das molare Verhältnis (B. + D.) : C. im Bereich von 0,9 : 1 bis 1,1 : 1 liegt.

2. Formmasse gemäß Anspruch 1 mit der Bedeutung von
Ar: 1.4-Phenylen.

3. Formmasse gemäß Anspruch 1 und 2 mit der Bedeutung von
Ar': 1.3- oder 1.4-Phenylen
oder ein Gemisch davon.

4. Formmasse gemäß den Ansprüchen 1 bis 3 mit der Bedeutung von
Ar'': 1.4-Phenylen oder 4.4'-Bisphenylen
oder ein Gemisch davon.

5. Formmasse gemäß den Ansprüchen 1 bis 4 mit der Bedeutung von
Ar''': 1.4-Phenylen.

6. Formmasse gemäß den Ansprüchen 1 bis 5, die ein Polyesterimid enthält, bei dem die Komponente D. 3 bis 60 Mol-% in der Summe der Komponenten B. und D. ausmacht.

7. Formmasse gemäß den Ansprüchen 1 bis 4, die ein Polyesterimid enthält, bei dem die Komponente D. 8 bis 40 Mol-% in der Summe der Komponenten B. und D. ausmacht.